# EUROPEAN PATENT APPLICATION

(11) **EP 4 492 806 A1**
(43) Date of publication of application: **15.01.2025**
(21) Application number: 23766054.3
(22) Date of filing: 08.03.2023
(51) Int. Cl.: H04N 23/60, H04N 23/70

(54) **EXPOSURE PHOTOGRAPHING METHOD AND APPARATUS, DEVICE, STORAGE MEDIUM, AND PROGRAM PRODUCT**

(30) Priority: 09.03.2022 CN 202210224340
(71) Applicant: Beijing Zitiao Network Technology Co., Ltd., Beijing 100190 (CN)
(72) Inventor: CHEN, Guanghui, Beijing 100086 (CN)
(74) Representative: Dentons UK and Middle East LLP
(86) International application number: PCT/CN2023/080327
(87) International publication number: WO 2023/169477

(57) **Abstract**

The present invention relates to an exposure photographing method and apparatus, a device, a storage medium, and a program product. The method comprises: obtaining an imaging image, wherein the imaging image indicates an image captured without exposure compensation; determining multi-dimensional information of the imaging image, wherein the multi-dimensional information at least comprises global brightness information, dynamic range information, and contrast information; determining exposure parameters on the basis of the multi-dimensional information; and performing exposure photographing according to the exposure parameters to obtain a target image.

## Description

### CROSS-REFERENCE TO RELATED APPLICATIONS

This application is based on and claims the benefit of priority to the Chinese patent application No. 202210224340.7 filed on March 09, 2022, which is hereby incorporated by reference in its entirety into the present application.

### TECHNICAL FIELD

The present disclosure relates to the field of image processing, in particular to an exposure shooting method, apparatus, device, storage medium and program product.

### BACKGROUND

With a rapid development of Internet technology and terminal equipment, image signal processors of most shooting terminal equipment have powerful image information processing functions, thus making a captured digital image as close as possible to a real scene effect seen by human eyes.

Automatic exposure algorithms in image signal processing systems of the existing terminal equipment are all statistical methods in a RAW domain and are greatly affected by camera sensors of the terminal equipment. A replacement of camera sensor with a new one once requires a recalibration of the image signal processing system to determine exposure value.

### SUMMARY

According to a first aspect of the present disclosure, an exposure shooting method is provided, comprising:
obtaining an imaging image;
determining multidimensional information of the imaging image, wherein the multidimensional information at least comprises global brightness information, dynamic range information, and contrast information;
determining an exposure value based on the multidimensional information; and
performing an exposure shooting according to the exposure value to obtain a target image.

According to a second aspect of the present disclosure, an exposure shooting apparatus is provided, comprising:
an image acquiring module configured to obtain an imaging image,
a multidimensional information determining module configured to determine multidimensional information of the imaging image, wherein the multidimensional information at least comprises global brightness information, dynamic range information, and contrast information;
an exposure value determining module configured to determine an exposure value based on the multidimensional information; and
an exposure shooting module configured to perform an exposure shooting according to the exposure value to obtain a target image.

According to a third aspect of the present disclosure, an electronic device is provided, comprising:
one or more processors;
a storage device configured to storing one or more programs,
wherein the one or more programs when executed by the one or more processors cause the one or more processors to implement the exposure shooting method as described in any of the first aspect.

According to a fourth aspect of the present disclosure, a computer-readable storage medium is provided, on which a computer program is stored, wherein the computer program when executed by a processor causes the processor to implement the exposure shooting method as described in any of the first aspect when executed by a processor.

According to a fifth aspect of the present disclosure, a computer program product is provided, wherein the computer program product comprises a computer program or instruction, which when implements the exposure shooting method as described in any of the first aspect.

According to a sixth aspect of the present disclosure, a computer program is provided, comprising: instructions, which when executed by a processor causes the processor to implement the exposure shooting method as described in any of the first aspect.

### BRIEF DESCRIPTION OF THE DRAWINGS

By combining the accompanying drawings and referring to the following detailed description, the above and other features, advantages, and aspects of each embodiment of the present disclosure will become more apparent. Throughout the drawings, the same or similar drawing reference signs indicate the same or similar elements. It should be understood that the accompanying drawings are illustrative, and the original and elements may not necessarily be drawn to scale.
Fig. 1 is a flowchart of an exposure shooting method in some embodiments of the present disclosure.
Fig. 2 is a schematic diagram of structure of an exposure shooting apparatus in some embodiments of the present disclosure.
Fig. 3 is a schematic diagram of structure of an electronic device in some embodiments of the present disclosure.

### DETAILED DESCRIPTION

A more detailed description of the embodiments of the present disclosure will be provided below with reference to the accompanying drawings. Although certain embodiments of the present disclosure are shown in the accompanying drawings, it should be understood that the present disclosure can be realized in various forms and should not be construed as limited to the embodiments described herein. Instead, these embodiments are provided for a more thorough and complete understanding of the present disclosure. It should be understood that the accompanying drawings and embodiments of the present disclosure are for illustrative purpose only rather than for limiting the protection scope of the present disclosure.

It should be understood that the various steps recorded in the embodiments of the disclosed method can be executed in different orders and/or in parallel. In addition, implementation of the method may comprise additional steps and/or omit executing the steps shown herein. The scope of the present disclosure is not limited in this regard.

The term "comprise" and its variations used herein are non-restrictive inclusion, meaning "comprising but not limited to". The term "based on" means "at least partially based on". The term "one embodiment" means "at least one embodiment". The term "another embodiment" means "at least one other embodiment". The term "some embodiments" means "at least some embodiments". The relevant definitions of other terms will be provided in the following description.

It should be noted that the concepts such as "first" and "second", etc., mentioned in the present disclosure are only used to distinguish different devices, modules or units, and are not intended to limit the order or interdependence of the functions performed by these devices, modules or units.

It should be noted that the modifications of "one" and "multiple" mentioned in the present disclosure are illustrative rather than restrictive, and those skilled in the art should understand that unless otherwise explicitly stated in the context, they should be understood as "one or more".

Names of messages or information interacted between multiple devices in the embodiments of the present disclosure are for illustrative purpose only rather than for limiting scopes of these messages or information.

With a rapid development of Internet technology and terminal equipment, image signal processors of most shooting terminal equipment have powerful image information processing functions, thus making a captured digital image as close as possible to a real scene effect seen by human eyes.

Automatic exposure algorithms in image signal processing systems of the existing terminal equipment are all statistical methods in a RAW domain and are greatly affected by camera sensors of the terminal equipment. A replacement of camera sensor with a new one once requires a recalibration of the image signal processing system to determine exposure value, wasting a lot of manpower and material resources, etc.

In order to solve the above problem, the present disclosure relates to an exposure shooting method and apparatus, a device, a storage medium, and a program product. Multidimensional information is obtained through a conversion of an image, and a model is trained to obtain a mapping relationship between the multidimensional information and an exposure value of the image. After continuously adjusting an exposure estimation value to make it approximate a reasonable range, the exposure value is finally determined. The problem that a recalibration of the image signal processing system is required after replacing the camera sensor with a new one once in the prior art is solved and manpower and material resources are saved, and an imaging effect of the image in all scenes is improved.

An elaborated introduction to the exposure shooting method proposed in the embodiments of the present disclosure is provided below in conjunction with the accompanying drawings.

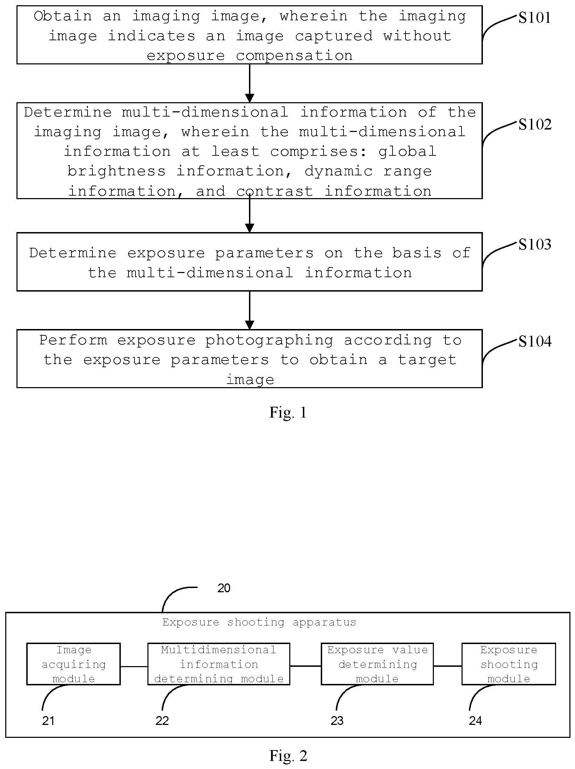

Fig. 1 is a flowchart of an exposure shooting method in some embodiments of the present disclosure. The present embodiment is applicable to terminal equipment with a camera sensor installed for image shooting. The method can be executed by an exposure shooting device, which can be realized in form of software and/or hardware and can be configured in electronic device.

For example, the electronic device can be a mobile terminal, a fixed terminal or a portable terminal, such as a mobile phone, a site, a unit, a device, a multimedia computer, a multimedia tablet, an Internet node, a communicator, a desktop computer, a laptop computer, a netbook computer, a tablet computer, a Personal Communication System (PCS) device, a personal navigation device, a Personal Digital Assistant (PDA), an audio/video player, a digital camera/video camera, a positioning device, a television receiver, a radio broadcasting receiver, an e-book device, a game device or any combination thereof, comprising accessories and peripherals of these device or any combination thereof.

For example, the electronic device can be a server, wherein the server can be a physical server, or a cloud server; the server can be one server, or a server cluster.

As shown in Fig. 1, the exposure shooting method provided in some embodiments of the present disclosure mainly comprises the following steps: S101 to S104.

In step S101, an imaging image is obtained, wherein the imaging image is an image shot without an exposure compensation.

Specifically, an existing shooting terminal processes image signals in real-time by an Image Signal Processor (ISP) running various algorithm programs. A specific processing flow of the ISP is as follows: after a lens projects a light signal into a photosensitive area of a sensor, the sensor undergoes photoelectric conversion and sends an original image in Bayer format to the ISP, wherein the Bayer format is the original image format inside the camera; the ISP processes an algorithm to output an image of the RGB (Red Green Blue) spatial domain to a back-end image/video capture unit. A logic control of the ISP is performed by running a firmware and the lens and the sensor are controlled accordingly, and then functions such as an automatic aperture, an automatic exposure, an automatic white balance, etc. are completed. In other words, an image sharpening, a noise reduction, and a color optimization are all completed in the ISP. Moreover, the ISP is also responsible for implementing a hybrid focusing operation of phase, laser, contrast and so on, and providing support for multiple cameras, etc. These important tasks are an indispensable key part of photography and videography of the shooting terminal. Further, the image of the RGB spatial domain is derived from the RGB color model which is an additive color model and can synthesize various colored lights by adding the three primary color lights of red, green, and blue in different proportions.

The imaging image refers to an image shot without an exposure compensation, that is, the image shot by a shooting terminal without using the exposure shooting method provided in the embodiments.

In some embodiments, in response to the shooting terminal being in a video-recording mode, the imaging image may be a current video frame captured by a camera of the shooting terminal. Further, the exposure shooting method provided in the embodiments of the present disclosure is applied to the current video frame, and after determining an exposure value, subsequent video frames are shot using the exposure value.

It should be noted that during a process of shooting the subsequent video frames using the determined exposure value, the exposure shooting method provided in the embodiments of the present disclosure can also be continuously used to keep adjusting the exposure value based on the imaging image.

In other embodiments, in response to the shooting terminal being in a photograph mode, the imaging image can be an image collected by a camera of the shooting terminal. The imaging image collected by the camera can be acquired in real-time after detecting that the camera of the shooting terminal is turned on. Further, the exposure shooting method provided in the embodiments of the present disclosure is applied to the acquired imaging image to determine the exposure value, and after receiving a shooting instruction, a shooting is performed using the determined exposure value to obtain a target image.

In step S102, multidimensional information of the imaging image is determined, wherein the multidimensional information at least comprises global brightness information, dynamic range information, and contrast information.

In some embodiments, the multidimensional information at least comprises the global brightness information, the dynamic range information, and the contrast information, and different parameters of the multidimensional information are not independent of each other. Changing one parameter of the multidimensional information may cause changes in another parameter of the image of the multidimensional information.

The dynamic range can be understood as a range between a brightest pixel value and a darkest pixel value in the imaging image.

A brightness of an image can be understood as a lighting and shading degree of the image, and the brightness integrates different optical quantities. In a monochromatic image, a range of an image function is limited, with a highest value corresponding to white color and a lowest value corresponding to black color. The global brightness information can be understood as an average value of brightness values of the entire imaging image.

The contrast information of the imaging image is related to the brightness of the imaging image. The contrast information refers to a brightness contrast of an image. The larger a difference range, the greater the contrast information, and the smaller the difference range, the smaller the contrast information. An impact of a contrast on a visual effect of an image is crucial. Generally, the higher the contrast, the more vivid and brighter colors of the image will be, while a lower contrast will make the entire image appear grayish.

For example, a dynamic range refers to a range of an interval between a maximum grayscale value and a minimum grayscale value of pixels in the imaging image, and the dynamic range information can be understood as a parameter that represents the size of the dynamic range of the imaging image. The larger the dynamic range information, the larger the dynamic range the imaging image, that is, the imaging image is an image with a high dynamic range; the smaller the dynamic range information, the smaller the dynamic range of the imaging image, that is, the imaging image is an image with a low dynamic range.

It should be noted that the multidimensional information is associated with a brightness value(s) of the imaging image. As is known from the above embodiments, the image captured by the camera is an image of the RGB spatial domain, and therefore, it is necessary to convert the imaging image.

In some embodiments, the imaging image is converted to an image of a YUV spatial domain, a value(s) of Y channel is acquired to determine a brightness value(s) of the imaging image, and the multidimensional information of the image of the YUV spatial domain is calculated.

In some embodiments, the determining multidimensional information of the imaging image comprises: converting the imaging image into an image in a Lab color space; and calculating the multidimensional information of the image in the Lab color space.

Specifically, the Lab color space can also be written as CIELAB. The Lab color space is designed to be perceptually uniform. A change in a given value corresponds to a similar change in perceptual color. The Lab color space expresses colors with three values: "L" represents a perceptual brightness value, and "a" and "b*" represent four unique color values of human vision: red, green, blue, and yellow. Three basic coordinates: L represents a brightness value of color, L=0 generates black, L=100 represents white; a represents green if a is a negative value, and a represents magenta if a is a positive value; b represents blue if b is a negative value, and b represents yellow if **b** is a positive value.

The global brightness information, the dynamic range information, the contrast information, and other multidimensional information in the embodiments of the present disclosure are all determined based on the brightness value L of the Lab color space model, and do not involve "a*" and "b*" color values. This is because the human eye is much more sensitive to changes of the brightness than to that of colors.

The multidimensional information is determined based on the brightness value L of the Lab color space model, resulting in more accurate exposure value obtained and making subsequently shot images more perfect.

In some embodiments, the determining multidimensional information of the imaging image comprises: obtaining brightness values of multiple pixel points in the imaging image; and taking an average value of the brightness values of the multiple pixel points as the global brightness information of the imaging image.

In some embodiments, the imaging image can be converted to an image of a YUV spatial domain, and a value(s) of Y channel is acquired as the brightness value(s) of the imaging image. Alternatively, the imaging image can be converted to an image in the Lab color space, and a value(s) of L channel is acquired as the brightness value(s) of the imaging image. It should be noted that in the following embodiments, the brightness value(s) of the imaging image is explained all using the value(s) of L channel in the Lab color space as an example.

In some embodiments, a brightness value L of each pixel point of the image within the Lab color space can be acquired and the average value of the brightness values L of all pixel points can be calculated as the global brightness information of the imaging image.

In some embodiments, the determining multidimensional information of the imaging image comprises: determining a number of a first pixel point(s) with a brightness value(s) greater than a first brightness threshold in the imaging image; determining a number of a second pixel point(s) with a brightness value(s) less than a second brightness threshold in the imaging image, wherein the first brightness threshold is greater than the second brightness threshold; and determining the dynamic range information of the imaging image based on the number of the first pixel point(s), the number of the second pixel point(s), and a total number of pixel points in the imaging image.

The first brightness threshold can be a threshold that represents an overexposure of the imaging image. If the brightness value of a certain pixel point in the imaging image is greater than the first brightness threshold, it indicates that the pixel point is overexposed and is a pixel point with a higher brightness. In some embodiments, for each of the pixel points in the imaging image, a comparison with the first brightness threshold is carried out sequentially to count the number of the pixel point(s) with brightness value(s) greater than the first brightness threshold as the number of the first pixel point(s).

The second brightness threshold can be a threshold that represents an underexposure of the imaging image. If the brightness value of a pixel point in the imaging image is less than the second brightness threshold, it indicates that the pixel point is underexposed and is a pixel point with a lower brightness. In some embodiments, for each of the pixel points in the imaging image, a comparison with the second brightness threshold is carried out sequentially to count the number of the pixel point(s) with brightness value(s) less than the second brightness threshold as the number of the second pixel point(s).

In some embodiments, a method is provided to determine the number of the first pixel point(s) and the number of the second pixel point(s). A histogram corresponding to the imaging image is determined, and the number of the pixel point(s) with the brightness value(s) greater than the first brightness threshold in the histogram is accumulated as the number of the first pixel point(s); the number of the pixel point(s) with the brightness value(s)less than the second brightness threshold in the histogram is accumulated as the number of the second pixel point(s).

Specifically, the histogram accurately represents a distribution of data in graphic. The histogram in the embodiments of the present disclosure can be a function of the brightness values and a statistic of a distribution of the brightness values of the imaging image. Further, the histogram shows a number of pixel points of each brightness value counted in the imaging image. The histogram represents a number of the pixel points with a certain brightness value in the imaging image, which can reflect a frequency of a certain brightness value appearing in the imaging image. The histogram is generally used in a threshold selection of image processing.

Specifically, the brightness values of all pixel points in the imaging image are plotted into a histogram of brightness, from which a distribution of brightness values of the imaging image can be visually observed. The number of the pixel point(s) with the brightness value(s) greater than the first brightness threshold in the histogram are accumulated as the number of the first pixel point(s); the number of the pixel point(s) with the brightness value(s) less than the second brightness threshold in the histogram are accumulated as the number of the second pixel point(s).

In some embodiments, the determining the dynamic range information of the imaging image based on the number of the first pixel point(s), the number of the second pixel point(s), and the total number of pixel points in the imaging image comprises: calculating a first ratio of the number of the first pixel point(s) to the total number of pixel points; calculating a second ratio of the number of the second pixel point(s) to the total number of pixel points; and determining a sum of the first ratio and the second ratio as the dynamic range information of the imaging image.

In some embodiments, a first proportion of a number of a overexposed pixel point(s) to the total number of pixel points in the imaging image is calculated, and a second proportion of a number of a underexposed pixel point(s) to the total number of pixel points in the imaging image is calculated. A sum value of the first proportion and the second proportion represents the dynamic range information of the entire imaging image. The larger the sum value of the first proportion and the second proportion, the larger the dynamic range of the imaging image; the smaller the sum value of the first proportion and the second proportion, the smaller the dynamic range of the imaging image.

In the present embodiment, a quantification method of the dynamic range to facilitate the subsequent processing is provided by characterizing the dynamic range of the imaging image with the sum value of the proportion of overexposed pixel points and the proportion of underexposed pixel points.

In some embodiments, the determining the dynamic range information of the imaging image based on the number of the first pixel point(s), the number of the second pixel point(s), and the total number of pixel points in the imaging image comprises: calculating a sum value of the number of the first pixel point(s) and the number of the second pixel point(s); and determining a ratio of the sum value to the total number of pixel points as the dynamic range information of the imaging image.

In some embodiments, the determining multidimensional information of the imaging image comprises: calculating a standard deviation of brightness values of multiple pixel points and a mean of the multiple pixel points in the imaging image respectively; and taking a ratio of the standard deviation to the mean as the contrast information.

Specifically, the mean and the standard deviation are the two most important indicators for describing a centralized trend and a discrete degree of data. The mean refers to an average, that is, the sum of all data in a set is divided by a number of the data in the set. A definition of the standard deviation is an arithmetic square root of a variance. That is, a square sum of differences between all data in a set and an average of all the data is obtained, a square root of a value obtained by dividing the square sum by a number of the data in the set is the standard deviation of the data in the set.

In the embodiments of the present disclosure, the brightness values of all pixel points in the imaging image are taken as a dataset, and the standard deviation and the mean of data are calculated. Finally, a coefficient of variation, which is a result of dividing the standard deviation by the mean, is token as the contrast information of the imaging image. The coefficient of variation is a statistical measure that measures a degree of variation of each data, and does not need to refer to an average value of the data. It is a dimensionless number. When comparing the degree of variation among multiple sets of data, the smaller the coefficient of variation, the smaller the degree of variation.

In the present embodiment, a quantification method of the contrast information to facilitate a subsequent calculation of the exposure value is provided, using the ratio of the standard deviation to the mean of the brightness values of all pixel points as the contrast information.

In S103, an exposure value is determined based on the multidimensional information.

In video shooting, the Exposure Value (EV) represents all aperture and shutter combinations of a camera that can provide the same exposure. The exposure value is used to simplify a selection among equivalent shooting parameters. The exposure value is a log scale system base 2. Although theoretically all shooting parameters with the same exposure value will give the same exposure, they may not necessarily produce completely identical photos because a speed of the shutter determines a degree of motion blur and the aperture determines a depth of field.

Further, in the embodiments of the present disclosure, the multidimensional information of the imaging image is used to determine the exposure value, that is, the global brightness information, the dynamic range information, the contrast information, and the like are used to determine the exposure value. For example, in video shooting, the multidimensional information of a current frame image is calculated to adjust the exposure value, thereby achieving a better imaging effect of subsequent video frames.

In some embodiments, a scene type of the imaging image is determined; a mapping relationship between pre-stored multidimensional information and an exposure value under the scene type is obtained; and the exposure value is determined based on the multidimensional information and the mapping relationship.

The scene type of the imaging image refers to whether a scene of the imaging image is daytime or nighttime. It should be noted that the scene of daytime can be understood as a scene with higher brightness of the imaging image, and a scene where an indoor light is turned on at night can also be understood as a daytime scene. An indoor scene that are relatively dim during daytime can also be understood as a scene of nighttime. In other words, whether the scene type in the present embodiment is daytime or nighttime, is determined based on the brightness of the scene rather than based on the time conventionally.

In some embodiments, a pre-trained scene detection model is used to determine the scene type of an imaging image.

Specifically, the imaging image is input into a pre-trained scene detection model, which outputs the scene type, that is, whether the scene of the imaging image is daytime or nighttime is output. The scene detection model can adopt a network structure of mobilenet, a dataset is obtained through preliminary human annotations, and a result of binary classification is got by training. It should be noted that the scene in the embodiments of the present disclosure only have two types: a scene of daytime and a scene of nighttime.

The moilenet network model strives to maintain a balance between its rapidly developing computer vision and deep learning field and a limitation of a mobile environment. The shooting terminal in the embodiments of the present disclosure is often portable device that is movable. Therefore, using the network model of mobilenet can balance the computer vision and the deep learning field with the limitation of the mobile environment.

Specifically, for different scene types, the mapping relationship between the multidimensional information and the exposure value is set. That is, in the scene of daytime, a mapping relationship between a set of multidimensional information and exposure values is set, and in the scene of nighttime, a mapping relationship between a set of multidimensional information and exposure values is set. The above mapping relationships can be determined through empirical values or obtained through model training. In the present embodiment, the determining method of the above mapping relationships is not limited.

Further, after determining the mapping relationship, the exposure value is determined based on the multidimensional information and the mapping relationship.

In some embodiments, after determining the exposure value based on the multidimensional information and the mapping relationship, the exposure range under the scene type is obtained; in response to the exposure value being not within the exposure range, the exposure value is adjusted to make the exposure value after adjustment to be within the exposure range.

Specifically, during a training process of the scene detection model, there is a significant difference in the exposure value between the scene of daytime and the scene of nighttime. In training process of the scene detection model, exposure ranges of the two scene types are acquired, and only the exposure value within the exposure range under the scene type can be used as the final exposure value for an exposure shooting of a subsequent image. If the exposure value is not within the exposure range under the scene type, it indicates that the exposure value is not suitable as the final exposure value.

In the embodiments of the present disclosure, an exposure compensation value is obtained by a difference value between the exposure value and the exposure range. The exposure value is adjusted by dual actions of the exposure value and the exposure compensation value, so that the exposure value is gradually approximated into the exposure range under the scene type.

In step S104, an exposure shooting is performed according to the exposure value to obtain a target image.

In some embodiments, in response to the shooting terminal being in the video-recording mode, after determining the exposure value, subsequent video frames are shot using an exposure performed according to the exposure value.

In other embodiments, in response to the shooting terminal being in the photograph mode, after determining the exposure value and receiving a shooting instruction, the target image is obtained using the exposure shooting performed according to the exposure value.

The present disclosure relates to the exposure shooting method comprising: obtaining the imaging image; determining the multidimensional information of the imaging image, wherein the multidimensional information at least comprises: the global brightness information, the dynamic range information, and the contrast information; determining the exposure value based on the multidimensional information; performing the exposure shooting according to the exposure value to obtain the target image. The embodiments of the present disclosure solves the problem that a recalibration of the image signal processing system is required after replacing the camera sensor with a new one once in the prior art by obtaining the multidimensional information in the image and calculating the exposure value based on the multidimensional information, thereby saving manpower and material resources and improving an imaging effect of the image in all scenes.

Fig. 2 is a schematic diagram of structure of an exposure shooting apparatus in some embodiments of the present disclosure. The present embodiment is applicable to the case of adjusting an exposure value of a device. The exposure shooting apparatus can be realized in form of software and/or hardware, and a configuration management device can be configured in electronic device.

As shown in Fig. 2, the exposure shooting apparatus 20 provided in the embodiments of the present disclosure mainly comprises an image acquiring module 21, a multidimensional information determining module 22, an exposure value determining module 23, and an exposure shooting module 24.

The image acquiring module 21 is configured to obtain an imaging image, wherein the imaging image is an image shot without an exposure compensation. The multidimensional information determining module 22 is configured to determine multidimensional information of the imaging image, wherein the multidimensional information at least comprises global brightness information, dynamic range information, and contrast information. The exposure value determining module 23 is configured to determine an exposure value based on the multidimensional information. The exposure shooting module 24 is configured to perform an exposure shooting according to the exposure value to obtain a target image.

The embodiments of the present disclosure provide an exposure shooting apparatus, configured to execute the following process: obtaining an imaging image, wherein the imaging image is an image shot without an exposure compensation; determining multidimensional information of the imaging image, wherein the multidimensional information at least comprises global brightness information, dynamic range information, and contrast information; determining an exposure value based on the multidimensional information. In the embodiments of the present disclosure, multidimensional information is obtained through a conversion of an image, and a model is trained to obtain a mapping relationship between the multidimensional information and an exposure value of the image. After continuously adjusting an exposure estimation value to make it approximate a reasonable range, the exposure value is finally determined. The problem that a recalibration of the image signal processing system is required after replacing the camera sensor with a new one once in the prior art is solved and manpower and material resources are saved, and an imaging effect of the image in all scenes is improved.

In some embodiments, the multidimensional information determining module 22 comprises:
an image conversion unit configured to convert the imaging image into an image in a Lab color space; a multidimensional information calculation unit configured to calculate the multidimensional information of the image in the Lab color space.

In some embodiments, the multidimensional information determining module 22 comprises:
a brightness value acquisition unit configured to obtain brightness values of multiple pixel points in the imaging image; a global brightness information determination unit configured to take an average value of the brightness values of the multiple pixel points as the global brightness information of the imaging image.

In some embodiments, the multidimensional information determining module 22 comprises: a first pixel point number determination unit configured to determine a number of a first pixel point with a brightness value greater than a first brightness threshold in the imaging image; a second pixel point number determination unit configured to determine a number of a second pixel point with a brightness value less than a second brightness threshold in the imaging image, wherein the first brightness threshold is greater than the second brightness threshold; a brightness range information determination unit configured to determine the dynamic range information of the imaging image based on the number of the first pixel point, the number of the second pixel point, and a total number of pixel points in the imaging image.

In some embodiments, the brightness range information determination unit is specifically configured to calculate a first ratio of the number of the first pixel point to the total number of pixel points; calculate a second ratio of the number of the second pixel point to the total number of pixel points; and determine a sum of the first ratio and the second ratio as the dynamic range information of the imaging image.

In some embodiments, the multidimensional information determining module 22 comprises: a standard deviation and mean calculation unit configured to calculate a standard deviation of brightness values of multiple pixel points and a mean of the multiple pixel points in the imaging image respectively; and a contrast information determination unit configured to take a ratio of the standard deviation to the mean as the contrast information.

In some embodiments, the exposure value determining module 23 comprises:
a scene type determination unit configured to determine a scene type of the imaging image; a mapping relationship determination unit configured to obtain a mapping relationship between pre-stored multidimensional information and an exposure value under the scene type; and an exposure value determination unit configured to determine the exposure value based on the multidimensional information and the mapping relationship.

In some embodiments, the exposure value determining module 23 further comprises: an exposure range acquisition unit configured to after the determining the exposure value based on the multidimensional information and the mapping relationship, obtain an exposure range under the scene type; an exposure value adjustment unit configured to in response to the exposure value being not within the exposure range, adjust the exposure value to make the exposure value after adjustment to be within the exposure range.

The exposure shooting apparatus provided in the embodiments of the present disclosure can execute the steps that are carried out in the exposure shooting method provided in the embodiments of the disclosed method, and the particular execution steps and beneficial effects will not be repeated here.

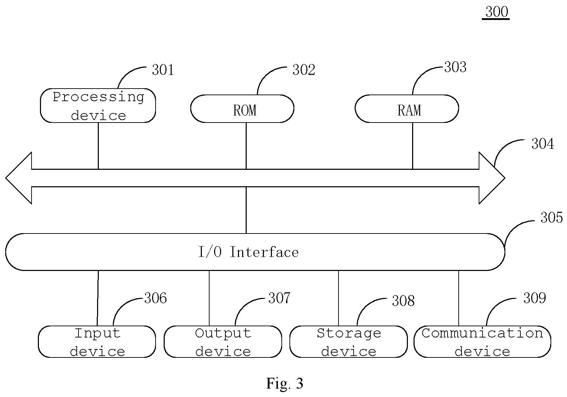

Fig. 3 is a schematic diagram of structure of a piece of electronic device in some embodiments of the present disclosure. Specifically referring to Fig. 3 in below, it illustrates a schematic diagram of the structure suitable for realizing the electronic device 300 in the embodiments of the present disclosure. The electronic device 300 in the embodiments of the present disclosure may comprise, but not limited to, a mobile terminal such as a mobile phone, a laptop computer, a digital broadcasting receiver, a PDA (Personal Digital Assistant), a PAD (tablet computer), a PMP (Portable Multimedia Player), a vehicle-mounted terminal (e.g. vehicle-mounted navigation terminal), a wearable terminal equipment, etc., and a fixed terminal such as a digital TV, a desktop computer, a smart home equipment, etc. The terminal device shown in Fig. 3 is only an example and should not impose any limitation on the functions and usage scopes of the embodiments of the present disclosure.

As shown in Fig. 3, the electronic device 300 may comprise a processing device (e.g. central processing unit, graphics processor, etc.) 301, which can perform various appropriate actions and processes according to programs stored in a Read-Only Memory (ROM) 302 or programs loaded from a storage device 308 into a Random Access Memory (RAM) 303 to implement the image rendering method as described in the embodiments of the present disclosure. In the RAM 303 are also stored various programs and data required for operations of the terminal equipment 300. The processing device 301, ROM 302, and RAM 303 are connected to each other through a bus 304. An input/output (I/O) interface 305 is also connected to the bus 304.

Typically, the following devices can be connected to the I/O interface 305: an input device 306 comprising: for example, a touch screen, a touchpad, a keyboard, a mouse, a camera, a microphone, an accelerometer, a gyroscope, etc.; an output device 307 comprising: for example, a liquid crystal display (LCD), a speaker, a vibrator, etc.; a storage device 308 comprising: for example, a magnetic tape, a hard disk, etc.; and a communication device 309. The communication device 309 can allow the terminal device 300 to communicate wirelessly or wired with other equipment to exchange data. Although Fig. 3 illustrates the terminal device 300 with various devices, it should be understood that it is not required to implement or have all the shown devices. More or fewer devices can be implemented or included as an alternative.

Specifically, according to the embodiments of the present disclosure, the process described above with reference to the flowchart can be realized as a computer software program. For example, the embodiments of the present disclosure comprise a computer program product, which comprises a computer program carried on a non-transient computer-readable medium, wherein the computer program comprises program codes for executing the method shown in the flowchart, thereby implementing the page redirection method as described above. In such embodiments, the computer program can be downloaded and installed from network through the communication device 309, or installed from the storage device 308, or installed from the ROM 302. When the computer program is executed by the processing device 301, the above-mentioned functions defined in the method of the embodiments of the present disclosure are executed.

It should be noted that the above computer-readable medium mentioned in the present disclosure can be a computer-readable signal medium, a computer-readable storage medium, or any combination of both. The computer-readable storage medium, for example, can be, but not limited to, an electrical, magnetic, optical, electromagnetic, infrared, or semiconductor system, device, or component, or any combination thereof. More specific examples of the computer-readable storage medium may comprise, but not limited to: electrical connection with one or more wires, portable computer disk, hard disk, Random Access Memory (RAM), Read-Only Memory (ROM), Erasable Programmable Read-Only Memory (EPROM or flash), fiber optic, Portable Compact Disk Read-Only Memory (CD-ROM), optical storage device, magnetic storage device, or any suitable combination thereof. In the present disclosure, the computer-readable storage medium can be any tangible medium containing or storing a program, which can be used by an instruction execution system, device, or component, or in combination with the same. While in the present disclosure, the computer-readable signal medium can comprise data signals propagated in the baseband or as a part of the carrier wave, which carry computer-readable program codes. This type of propagated data signals can take various forms, comprising but not limited to electromagnetic signal, optical signal, or any suitable combination thereof. The computer-readable signal medium can also be any computer-readable medium other than the computer-readable storage medium, which can send, propagate, or transmit a program used by or in combination with the instruction execution system, device, or component. The program codes contained in the computer-readable medium can be transmitted using any appropriate medium, comprising but not limited to: wire, optical cable, RF (Radio Frequency), etc., or any suitable combination thereof.

In some implementations, client and server can communicate using any currently known or future developed network protocol, such as HTTP (HyperText Transfer Protocol), and can interconnect with any form or medium of digital data communication (such as communication network). Examples of the communication network comprise Local Area Network ("LAN"), Wide Area Network ("WAN"), internet (for example, the Internet), and end-to-end network (for example, ad hoc end-to-end network), as well as any currently known or future developed network.

The computer-readable medium mentioned above can be included in the aforesaid electronic equipment; it can also exist separately without being assembled into the electronic equipment.

The computer-readable medium mentioned above carries one or more programs, which, when executed by the terminal device, enable the terminal device to obtain an imaging image, wherein the imaging image is an image shot without an exposure compensation; determine multidimensional information of the imaging image, wherein the multidimensional information at least comprises global brightness information, dynamic range information, and contrast information; determine an exposure value based on the multidimensional information; and perform an exposure shooting according to the exposure value to obtain a target image.

Optionally, when the above one or more programs are executed by the terminal device, the terminal device can also execute other steps as described in the above embodiments.

The computer program codes for executing operations of the present disclosure may be written in one or more programming languages or combinations thereof, comprising but not limited to object-oriented programming languages such as Java, Smalltalk, C++, and conventional procedural programming languages such as C or similar programming languages. The program codes can be completely executed on a user's computer, partially executed on a user's computer, executed as an independent software package, partially executed on a user's computer and partially executed on a remote computer, or completely executed on a remote computer or server. In the case involving a remote computer, the remote computer can connect to the user's computer through any type of network (comprising Local Area Network (LAN) or Wide Area Network (WAN)), or can connect to an external computer (e.g. connect via the Internet using an Internet service provider).

The flowchart and block diagram in the accompanying drawings illustrate the possible architecture, functions, and operations of the system, method, and computer program product according to various embodiments of the present disclosure. At this point, each box in the flowchart or block diagram can represent a module, program segment, or part of codes that includes one or more executable instructions for realizing a specified logical function. It should also be noted that in some alternative implementations, the functions indicated in the box can also occur in a different order than those indicated in the accompanying drawings. For example, two consecutive boxes can actually be executed in basically parallel, and sometimes they can also be executed in reverse order, depending on the function involved. It should also be noted that each box in the block diagram and/or flowchart, as well as the combination of boxes in the block diagram and/or flowchart, can be realized using a dedicated hardware based system that executes specified functions or operations, or can be realized using a combination of dedicated hardware and computer instructions.

The involved units described in the embodiments of the present disclosure can be realized in form of software or in form of hardware. Wherein, name of the unit does not constitute a limitation on the unit itself in a certain situation.

The above functions described herein can be at least partially executed by one or more hardware logic components. For example, non-restrictively, demonstration types of the hardware logic components that can be used comprise: Field Programmable Gate Array (FPGA), Application Specific Integrated Circuit (ASIC), Application Specific Standard Product (ASSP), System on Chip (SOC), Complex Programmable Logic Device (CPLD), and the like.

In the context of the present disclosure, a machine readable medium can be a tangible medium that can include or store a program that can be used by an instruction execution system, device, or equipment or in combination with an instruction execution system, device, or equipment. The machine readable medium can be a machine readable signal medium or a machine readable storage medium. The machine readable medium can comprise but not limited to an electronic, magnetic, optical, electromagnetic, infrared, or semiconductor system, device, or equipment, or any suitable combination thereof. More specific examples of the machine readable storage medium can comprise electrical connection based on one or more wires, portable computer disk, hard disk, Random Access Memory (RAM), Read-Only Memory (ROM), Erasable Programmable Read-Only Memory (EPROM or flash memory), optical fiber, Compact Disc Read-Only Memory (CD-ROM), optical storage device, magnetic storage device, or any suitable combination thereof.

According to some embodiments of the present disclosure, the present disclosure provides an exposure shooting method, comprising: obtaining an imaging image, wherein the imaging image is an image shot without an exposure compensation; determining multidimensional information of the imaging image, wherein the multidimensional information at least comprises global brightness information, dynamic range information, and contrast information; determining an exposure value based on the multidimensional information; and performing an exposure shooting according to the exposure value to obtain a target image.

According to some embodiments of the present disclosure, the present disclosure provides an exposure shooting method, wherein based on the determining multidimensional information of the imaging image comprises: converting the imaging image into an image in a Lab color space; and calculating the multidimensional information of the image in the Lab color space.

According to some embodiments of the present disclosure, the present disclosure provides an exposure shooting method, wherein based on the determining multidimensional information of the imaging image, the exposure shooting method comprises: obtaining brightness values of multiple pixel points in the imaging image; and taking an average value of the brightness values of the multiple pixel points as the global brightness information of the imaging image.

According to some embodiments of the present disclosure, the present disclosure provides an exposure shooting method, wherein based on the determining multidimensional information of the imaging image comprises: determining a number of a first pixel point with a brightness value greater than a first brightness threshold in the imaging image; determining a number of a second pixel point with a brightness value less than a second brightness threshold in the imaging image, wherein the first brightness threshold is greater than the second brightness threshold; and determining the dynamic range information of the imaging image based on the number of the first pixel point, the number of the second pixel point, and a total number of pixel points in the imaging image.

According to some embodiments of the present disclosure, the present disclosure provides an exposure shooting method, wherein the determining the dynamic range information of the imaging image based on the number of the first pixel point, the number of the second pixel point, and a total number of pixel points in the imaging image comprises: calculating a first ratio of the number of the first pixel point to the total number of pixel points; calculating a second ratio of the number of the second pixel point to the total number of pixel points; and determining a sum of the first ratio and the second ratio as the dynamic range information of the imaging image.

According to some embodiments of the present disclosure, the present disclosure provides an exposure shooting method, wherein based on the determining multidimensional information of the imaging image comprises: calculating a standard deviation of brightness values of multiple pixel points and a mean of the multiple pixel points in the imaging image respectively; and taking a ratio of the standard deviation to the mean as the contrast information.

According to some embodiments of the present disclosure, the present disclosure provides an exposure shooting method, wherein the determining an exposure value based on the multidimensional information comprises: determining a scene type of the imaging image; obtaining a mapping relationship between pre-stored multidimensional information and an exposure value under the scene type; and determining the exposure value based on the multidimensional information and the mapping relationship.

According to some embodiments of the present disclosure, the present disclosure provides an exposure shooting method, further comprising, after the determining the exposure value based on the multidimensional information and the mapping relationship: obtaining an exposure range under the scene type; and in response to the exposure value being not within the exposure range, adjusting the exposure value to make the exposure value after adjustment to be within the exposure range.

According to some embodiments of the present disclosure, the present disclosure provides an exposure shooting method, wherein the determining multidimensional information of the imaging image comprises: converting the imaging image into an image of a YUV spatial domain; and obtaining a value of a Y channel to determine a brightness value of the imaging image, and calculating the multidimensional information of the image of the YUV spatial domain.

According to some embodiments of the present disclosure, the present disclosure provides an exposure shooting method, wherein the determining multidimensional information of the imaging image comprises: calculating a standard deviation of brightness values of multiple pixel points and a mean of the multiple pixel points in the imaging image respectively; and taking a ratio of the standard deviation to the mean as the contrast information.

According to some embodiments of the present disclosure, the present disclosure provides an exposure shooting device, comprising: an image acquiring module configured to obtain an imaging image, wherein the imaging image is an image shot without an exposure compensation; a multidimensional information determining module configured to determine multidimensional information of the imaging image, wherein the multidimensional information at least comprises global brightness information, dynamic range information, and contrast information; an exposure value determining module configured to determine an exposure value based on the multidimensional information; and an exposure shooting module configured to perform an exposure shooting according to the exposure value to obtain a target image.

In some embodiments, the present disclosure provides an exposure shooting apparatus, wherein the multidimensional information determining module comprises: an image conversion unit configured to convert the imaging image into an image in a Lab color space; a multidimensional information calculation unit configured to calculate the multidimensional information of the image in the Lab color space.

According to some embodiments of the present disclosure, the present disclosure provides an exposure shooting apparatus, wherein the multidimensional information determining module comprises: a brightness value acquisition unit configured to obtain brightness values of multiple pixel points in the imaging image; a global brightness information determination unit configured to take an average value of the brightness values of the multiple pixel points as the global brightness information of the imaging image.

According to some embodiments of the present disclosure, the present disclosure provides an exposure shooting apparatus, wherein the multidimensional information determining module comprises: a first pixel point number determination unit configured to determine a number of a first pixel point with a brightness value greater than a first brightness threshold in the imaging image; a second pixel point number determination unit configured to determine a number of a second pixel point with a brightness value less than a second brightness threshold in the imaging image, wherein the first brightness threshold is greater than the second brightness threshold; a brightness range information determination unit configured to determine the brightness range information of the imaging image based on the number of the first pixel point, the number of the second pixel point, and a total number of pixel points in the imaging image.

According to some embodiments of the present disclosure, the present disclosure provides an exposure shooting apparatus, wherein the brightness range information determination unit is specifically configured to calculate a first ratio of the number of the first pixel point to the total number of pixel points; calculate a second ratio of the number of the second pixel point to the total number of pixel points; and determine a sum of the first ratio and the second ratio as the brightness range information of the imaging image.

According to some embodiments of the present disclosure, the present disclosure provides an exposure shooting apparatus, wherein the multidimensional information determining module comprises: a standard deviation and mean calculation unit configured to calculate a standard deviation of brightness values of multiple pixel points and a mean of the multiple pixel points in the imaging image respectively; and a contrast information determination unit configured to take a ratio of the standard deviation to the mean as the contrast information.

According to some embodiments of the present disclosure, the present disclosure provides an exposure shooting apparatus, wherein the exposure value determining module comprises: a scene type determination unit configured to determine a scene type of the imaging image; a mapping relationship determination unit configured to obtain a mapping relationship between pre-stored multidimensional information and an exposure value under the scene type; and an exposure value determination unit configured to determine the exposure value based on the multidimensional information and the mapping relationship.

According to some embodiments of the present disclosure, the present disclosure provides an exposure shooting apparatus, wherein the exposure value determining module further comprises: an exposure range acquisition unit configured to after the determining the exposure value based on the multidimensional information and the mapping relationship, obtain an exposure range under the scene type; an exposure value adjustment unit configured to in response to the exposure value being not within the exposure range, adjust the exposure value to make the exposure value after adjustment to be within the exposure range.

According to some embodiments of the present disclosure, the present disclosure provides electronic equipment, comprising:
one or more processors; and
a memory, for storing one or more programs,
wherein the one or more programs when executed by the one or more processors cause the one or more processors to implement the exposure shooting method as provided in any embodiment of the present disclosure.

According to some embodiments of the present disclosure, the present disclosure provides a computer-readable storage medium,, on which a computer program is stored, wherein the computer program when executed by a processor cause the processor to implement the exposure shooting method as provided in any embodiment of the present disclosure.

The embodiments of the present disclosure also provide a computer program product, which comprises a computer program or instruction, which when executed by a processor causes the processor to implement the exposure shooting method as described in any of the above embodiments.

According to some embodiments of the present disclosure, the present disclosure provides a computer program comprising instructions, which, when executed by a processor, implement the exposure shooting method as described in any of the above embodiments.

The above description is only for explaining the preferred embodiments of the present disclosure and the technical principles used. Those skilled in the art should understand that the scope of disclosure involved in the present disclosure is not limited to technical solutions formed by specific combinations of the aforementioned technical features, and should also cover other technical solutions formed by arbitrary combination of the aforementioned technical features or their equivalent features when not departing from the disclosed concept. For example, a technical solution formed by exchanging the above features with the technical features with similar functions disclosed (but not limited to) in the present disclosure.

Furthermore, although the operations are depicted in a specific order, this should not be understood as requiring them to be executed in the specific order shown or in sequential order. In certain environments, multitasking and parallel processing may be advantageous. Similarly, although several specific implementation details are included in the above discussion, these should not be construed as limitations on the scope of the present disclosure. Some features described in the context of individual embodiments can also be combined to be implemented in a single embodiment. On the contrary, various features described in the context of a single embodiment can also be implemented separately or in multiple embodiments in any suitable manner of subcombination.

Although the subject matter has been described in language specific to structural features and/or method logical actions, it should be understood that the subject matter defined in the attached claims may not necessarily be limited to the specific features or actions described above. On the contrary, the specific features and actions described above are only exemplary forms of implementing the claims.

## Claims

1. An exposure shooting method, comprising:
obtaining an imaging image, wherein the imaging image is an image shot without an exposure compensation;
determining multidimensional information of the imaging image, wherein the multidimensional information at least comprises global brightness information, dynamic range information, and contrast information;
determining an exposure value based on the multidimensional information; and
performing an exposure shooting according to the exposure value to obtain a target image.

2. The exposure shooting method according to claim 1, wherein the determining multidimensional information of the imaging image comprises:
converting the imaging image into an image in a Lab color space; and
calculating the multidimensional information of the image in the Lab color space.

3. The exposure shooting method according to claim 1 or 2, wherein the determining multidimensional information of the imaging image comprises:
obtaining brightness values of multiple pixel points in the imaging image; and
taking an average value of the brightness values of the multiple pixel points as the global brightness information of the imaging image.

4. The exposure shooting method according to any of claims 1-3, wherein the determining multidimensional information of the imaging image comprises:
determining a number of a first pixel point with a brightness value greater than a first brightness threshold in the imaging image;
determining a number of a second pixel point with a brightness value less than a second brightness threshold in the imaging image, wherein the first brightness threshold is greater than the second brightness threshold; and
determining the dynamic range information of the imaging image based on the number of the first pixel point, the number of the second pixel point, and a total number of pixel points in the imaging image.

5. The exposure shooting method according to claim 4, wherein the determining the dynamic range information of the imaging image based on the number of the first pixel point, the number of the second pixel point, and a total number of pixel points in the imaging image comprises:
calculating a first ratio of the number of the first pixel point to the total number of pixel points;
calculating a second ratio of the number of the second pixel point to the total number of pixel points; and
determining a sum of the first ratio and the second ratio as the dynamic range information of the imaging image.

6. The exposure shooting method according to any of claims 1-5, wherein the determining multidimensional information of the imaging image comprises:
calculating a standard deviation of brightness values of multiple pixel points and a mean of the multiple pixel points in the imaging image respectively; and
taking a ratio of the standard deviation to the mean as the contrast information.

7. The exposure shooting method according to any of claims 1-6, wherein the determining an exposure value based on the multidimensional information comprises:
determining a scene type of the imaging image;
obtaining a mapping relationship between pre-stored multidimensional information and an exposure value under the scene type; and
determining the exposure value based on the multidimensional information and the mapping relationship.

8. The exposure shooting method according to claim 7, further comprising, after the determining the exposure value based on the multidimensional information and the mapping relationship:
obtaining an exposure range under the scene type; and
in response to the exposure value being not within the exposure range, adjusting the exposure value to make the exposure value after adjustment to be within the exposure range.

9. The exposure shooting method according to any of claims 1-8, wherein the determining multidimensional information of the imaging image comprises:
converting the imaging image into an image of a YUV spatial domain; and
obtaining a value of a Y channel to determine a brightness value of the imaging image, and calculating the multidimensional information of the image of the YUV spatial domain.

10. The exposure shooting method according to any of claims 1-9, wherein the determining multidimensional information of the imaging image comprises:
calculating a standard deviation of brightness values of multiple pixel points and a mean of the multiple pixel points in the imaging image respectively; and
taking a ratio of the standard deviation to the mean as the contrast information.

11. An exposure shooting apparatus, comprising:
an image acquiring module configured to obtain an imaging image, wherein the imaging image is an image shot without an exposure compensation;
a multidimensional information determining module configured to determine multidimensional information of the imaging image, wherein the multidimensional information at least comprises global brightness information, dynamic range information, and contrast information;
an exposure value determining module configured to determine an exposure value based on the multidimensional information; and
an exposure shooting module configured to perform an exposure shooting according to the exposure value to obtain a target image.

12. An electronic device, comprising:
one or more processors; and
a storage device configured to storing one or more programs,
wherein the one or more programs when executed by the one or more processors cause the one or more processors to implement the exposure shooting method according to any of claims 1 to 10.

13. A computer-readable storage medium, on which a computer program is stored, wherein the computer program when executed by a processor cause the processor to implement the exposure shooting method according to any of claims 1 to 10.

14. A computer program product, comprising a computer program or instruction, which when executed by a processor, cause the processor to implement the exposure shooting method according to any of claims 1 to 10.

15. A computer program, comprising: instructions, which when executed by a processor cause the processor to implement the exposure shooting method according to any of claims 1 to 10.
